Europäisches Patentamt

⑲ 🄰 European Patent Office

Office européen des brevets

(11) Publication number: **0 026 591**
**A1**

(12) **EUROPEAN PATENT APPLICATION**

(21) Application number: **80303127.7**

(22) Date of filing: **05.09.80**

(51) Int. Cl.³: **C 25 D 21/12**
**G 01 N 27/26, C 25 B 15/02**

(30) Priority: **07.09.79 GB 7931089**

(43) Date of publication of application:
**08.04.81 Bulletin 81/14**

(84) Designated Contracting States:
**BE DE FR GB NL**

(71) Applicant: **NATIONAL RESEARCH DEVELOPMENT**
**CORPORATION**
**P.O. Box 236 Kingsgate House 66-74 Victoria Street**
**London SW1E 6SL(GB)**

(72) Inventor: **Wright, Allen Richard**
**20 Ascot Close Hadrian Park**
**Wallsend, Tyne and Wear(GB)**

(72) Inventor: **Morris, Anthony Julian**
**2 Longclose Road Hamsterley Mill**
**Rowlands Gill, Tyne and Wear(GB)**

(74) Representative: **Neville, Peter Warwick**
**Patent Department National Research Development**
**Corporation P.O. Box 236 Kingsgate House**
**66-74 Victoria Street London SW1E 6SL(GB)**

(54) **Control of the pH or ion concentration of an electrolyte stream.**

㊝ The pH of an electrolyte-containing stream is controlled automatically to a desired value. The stream flows into a compartment (3a) of an electrolytic cell (1) (Reynolds number 7200) at a rate such that (cell volume)/(flow rate) is 0.03 seconds. A pH electrode down-stream of the cell (1) measures the pH. The measured pH is compared with the desired pH. The current through the cell (1) is adjusted in response to the comparison in order to electrolyse the stream to the desired pH.

Fig. 1

- 1 -

CONTROLLING ·pH OR ION CONCENTRATION OF A STREAM

This invention relates to controlling the pH of a stream containing electrolyte to a desired value, and more generally to controlling to a desired value the concentration of any specific ion in a stream.

pH control is frequently desired in effluent streams, and is conventionally sought by large stirred tanks, to which acid or alkali is added (usually through pneumatically actuated valves) according to the requirements of the tank as determined by titration. A process has recently been developed whereby the stream is conducted along a pipe with injection points for metered addition of chemicals. The addition is controlled in response to a pH electrode mounted within the pipe, and depends on the action of mechanical valves.

Disadvantages of conventional pH control using liquid alkali include the process and valve non-linearities and extreme sensitivity near the null-point of titration, that is, that the minimum volume that the valves can admit might have a large effect on pH. Titration characteristics are also affected by the type of system (monoprotic or polyprotic), effluent loading, and buffering conditions. A further disadvantage is the time taken for the system as a whole to respond to sudden changes, and that the system may over-react due to the relatively poor resolution and controllability ("rangeability") of mechanical (e.g. pneumatically actuated) valves.

Viewed in control theory terms, this amounts to noting that in conventional neutralisation processes where a mechanical valve is used to manipulate reagent flow the valve characteristic (usually chosen to be linear or equal-percentage) can contribute a variable gain to the control loop - an equal percentage characteristic results in a valve gain that varies proportionally with reagent flow, which can be undesirable.

Since most titration characteristics are so extremely sensitive to reagent addition with mechanical valves, and since loop gains change so much during process operation, the overall controller gain must be kept small in conventional neutralisation processes. However, in order to produce effective control action, the controller gain and natural frequency should be high, and the neutralising process itself should be well designed to provide good mixing with minimum dead and delay time characteristics.

Additional disadvantages of conventional pH control using lime (CaO, Ca(OH)$_2$) include its long reaction time, its transport costs, its difficulty of handling and metering, and (depending on the anions present) precipitation of insoluble calcium salts.

The present invention not only overcomes the inherent dynamic problems of long dead and delay times associated with conventional stirred-tank neutralisation, and those of control valve accuracy and rangeability, but also allows easy inclusion of adaptive controller gains that are continuously changed according to process operating conditions, together with the inclusion of feedforward compensation from measurable inlet effluent conditions.

The present invention consists in controlling the pH of a stream containing electrolyte to a desired value, the stream and/or said value being normally subject to disturbance, comprising passing the stream through a compartment of an electrochemical cell, detecting the pH of the stream emerging from the cell, comparing the detected pH with the desired pH and (normally continually) adjusting the current through the cell in response to the comparison.

This concept applies equally to increasing or decreasing the pH, whether above, below, at or passing 7, and can be extended to concentrations of other than H$^+$ ion, and hence the invention further consists in controlling to a desired value (which may be above, below or crossing the actual value) the concentration of a specific ion in a stream, (the stream and/or said desired value normally being subject to disturbance), comprising passing the stream through a compartment of an electrochemical cell, the compartment being separated from an electrode of the cell by a membrane selective towards that ion, the counterelectrode of the cell preferably being separated from the compartment by a porous diaphragm or ion-selective membrane; measuring the concentration of that ion in the stream emerging from that compartment of the cell (preferably continually automatically by colorimetry, titration or potentiometry, which may be ion-selective); comparing the detected concentration with the desired concentration; and (normally continually) adjusting the current through the cell in response to the comparison. The membrane selective towards that ion can be omitted in any of the following cases: (i) the ion can plate itself on the said electrode (e.g. $Cu^{++}$); (ii) the ion can discharge itself on the said electrode (e.g. $H^{+}$); or (iii) the concentration of that ion is to be increased (e.g. from zero).

Preferably the stream is turbulent as it passes through the cell. The volume of that compartment through which the stream passes, divided by the flow rate of the stream, is preferably less than 5 seconds, more preferably less than 1 second, most preferably less than 0.05 seconds. In this way, a superior control can be achieved than in large stirred tanks, where that quotient might typically be 1 to 5 minutes, sometimes more. When lime is used, that quotient might be hours or days.

The conventional mechanical valves, with their attendant problems, may thus be replaced by an electronic power supply with any desired rangeability, and much better resolution than most valves even with integral positioner. Split ranging of power supplies, if indeed required, is also much more easily achieved than with pneumatic control equipment.

In-line neutralisation using an electrochemical cell eliminates control valve dynamics as well as considerably improving stream mixing, and may well avoid the need for a tank, with its associated difficult dynamics, to avoid sudden load changes.

The problems associated with titration characteristic non-linearity, variable buffering and system dead time are still present although conventional control (P + I:- proportional plus integral; or P + I + D:- proportional plus integral plus derivative) is much more effective as a result of the dynamic improvements outlined above.

Titration characteristic problems can be overcome by using a digital (or analog) compensator to adapt its control algorithm parameters to changing system conditions and such a digital control policy can be implemented on a small, dedicated, microprocessor based device.

Large variations in inlet effluent flow rate and pH can be coped with by using feedforward control from measurements of inlet effluent conditions.

Possible processes which can be conducted in accordance with the invention include neutralisation of an acid or base optionally without electrolysing it or deionisation of an electrolyte optionally without electrolysing it and without its contacting any electrode (apart from possible sensor electrodes) or the controlled addition of an ion to a stream. This will be explained in more detail hereafter, and applications of this include crystallisation of certain organic products where pH changes during crystallisation, and metal deposition in pH-sensitive cases, such as of manganese. An advantage of the process is that the anode product may have valuable uses. Thus, the invention is particularly useful for the treatment of acid waste from chloralkali cells, as the chlorine produced in the waste-treatment cell can be returned to the main chloralkali cell or be used for bleaching, disinfecting etc, e.g. in paper mills. Another reaction to which it is suited is the alkaline hydrolysis of phenol to phenoxy anion, which can then form, in the presence of chloroacetic acid, sodium phenoxychloroacetate. This type of reaction is amenable to pH control.

The invention will now be described by way of example with reference to the accompanying drawings, in which

Figure 1 is a schematic cross-section of a cell used for adjusting pH, according to the invention,

Figure 2 is a schematic cross-section of a cell used for electrolytically neutralising an acid without electrolysing it, according to the invention,

Figures 3 and 4 show the effect of step changes in the desired-output-pH setting on the performance of the cell of Figure 1.

Figures 5 and 6 show the effect of step flow-rate changes on the performance of the cell of Figure 1,

Figures 7 and 8 show the effect of step changes in the inlet pH on the performance of the cell of Figure 1, and

Figures 9 and 10 are schematic cross-sections of cells used for removing copper from an effluent stream, according to the invention.

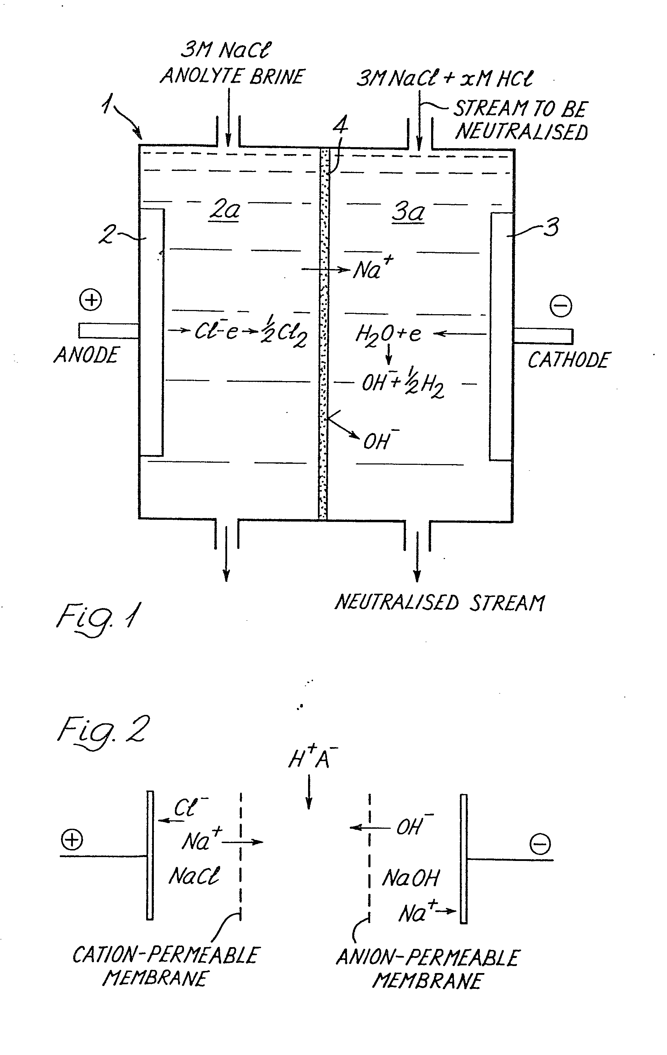

Figure 1 shows a cell 1 having an anode 2 of platinised titanium separated from a cathode 3 of stainless steel by a diaphragm 4 in the form of a cation-selective membrane, of Nafion (trade mark), having an area of 200 $cm^2$.

The cathode-membrane and membrane-anode spacings are both about 5 mm, the half-cell volume thus being about 100 $cm^3$.

Into the cathode compartment 3a is passed, at a rate of 18 litres per minute, a stream to be neutralised, containing 3M NaCl and variable concentrations of HCl. This rate gives a cathode compartment volume/flow rate quotient of 0.03 seconds and a Reynolds number based on the largest cross-section normal to the direction of flow of about 7200.

- 6 -

A controlled current of up to 100A was passed through the cell, requiring a voltage of up to 10V. This caused hydrogen to discharge at the cathode, thereby tending to neutralise the catholyte.

Meanwhile, a 3M aqueous solution of NaCl, anolyte brine, is passed through the anode compartment 2a at 1 - 2 litres/minute. The exact flow rate is immaterial, as long as it is sufficient to prevent concentration polarisation effects. Chlorine gas is evolved at the anode, and can be sold. In balance, $Na^+$ ions cross the diaphragm 4 making up for neutralised $H^+$ ions in the cathode compartment. The anolyte brine nonetheless can be recirculated several times before needing to be replenished.

A pH electrode (not shown) detects the pH of the neutralised catholyte after it has emerged from the cell 1, with a transport lag of about 2 seconds. A signal representing the detected pH passes to a controller such as a dedicated microprocessor, which compares this signal with the desired pH. In response to this comparison, the microprocessor transmits instructions to the current regulator to increase or diminish (or even reverse) the imposed current if the pH electrode detects a pH which is still excessively acidic or insufficiently acidic (or even alkaline).

In more detail, simulated effluent (3M NaCl) to be neutralised is pumped from a 500 1 storage tank via a flow meter through the cathode compartment 3a of the cell 1 and then to a second storage tank. Current to the cell is supplied by a power supply operating in "constant current mode" such that the current can be controlled in accordance with an external signal.

The cell output pH is measured by a pH electrode and for demonstrating the invention may be switched to either analog control or digital control. The analog controller is a Kent instrument Three Term Controller and was tuned on-line using Ziegler-Nichols settings as described in 1942 ASME 64 p. 759.

0026591

- 7 -

The digital controller was simulated in Fortran IV on a DEC
Computer with 32K of memory and analog/input/output channels.
Two types of control were used, namely Analog P I D (Proportional,
Integral and Derivative action), and Self-Tuner.  For more
information about self-tuners, see 'Single and Multivariable
Self-Tuning Microprocessor Based Regulators', paper by Morris,
Nazer and Chisholm, delivered at the 3rd International
Conference on Trends in On-Line Computer Control Systems,
Sheffield, March 1979, and Åström and Wittenmark, Automatica
Vol 9, 1973, pp 185-199.

Output from either the analog or digital controller is
switched to the electrochemical cell via the power supply.  The
control process can be represented in Laplace transfer form by:

$$Y(s) = Gv(s) \; Gp(s) \; U(s) + Gd(s) \; V(s) + n \qquad (1)$$

where Y, U, V and n are respectively the process measured pH
output, control action, unmeasurable disturbance and process noise.
Gv, Gp and Gd represent respectively the transfer functions of
the electrical power supply, the process (i.e. the cell) and the
disturbance.

The two or three term analog controller operates on any
error signal e that may exist between the set point W and the
measured plant output Y.

$$e = W - Y \qquad (2)$$

$$U = Kp(e + 1/Ti \int_{o}^{t} e.dt + Td.de/dt) \qquad (3)$$

or, since Kp is 1/(proportional bandwidth, pbw),

$$U = 1/pbw(e + 1/Ti \int_{o}^{t} e.dt + Td.de/dt) \qquad (4)$$

where Kp, Ti and Td are proportional gain, integral time and
derivative time.

Turning to the digital controller, processes generally may be
described in terms of a general discrete time model at sampling
time t thus:

$$Ay(t) = z^{-K_1} Bu(t) + z^{-K_2} Dv(t) + Cn(t) \qquad (5)$$

- 8 -

where A, B, D and C are polynomials in backshift operator $z^{-1}$ and y(t), u(t), v(t) and n(t) represent plant output, control action, disturbance and process noise at each sample instant. $K_1$ and $K_2$ are the discrete control-action- and disturbance-delays.

Considering now the self-tuner type of control, our self-tuner algorithm uses an online identification routine to minimise a prespecified cost function J to produce controller parameters. The cost function is given by

$$J = E((Py(t+K_1) - Rw(t))^2 + (Qu(t))^2) \qquad (6)$$

E is the expectation operator, and Q is a control weighting function. R and P are operators. The controller parameters may be represented by polynomials F, G and H which act on y, u and w respectively. The control action u is then calculated from

$$u(t) = 1/Q(Fy(t) + Gu(t) + Cw(t)). \qquad (7)$$

Performance studies on a self-tuner and a conventional controller when applied to simulated effluent pH control using the electrochemical cell 1 show the process to be very time-dependent and non-linear as between pH and cell current. System dynamics vary with time, and the transfer function is dependent on the steady state pH, input flow rate, input pH and buffering capacity.

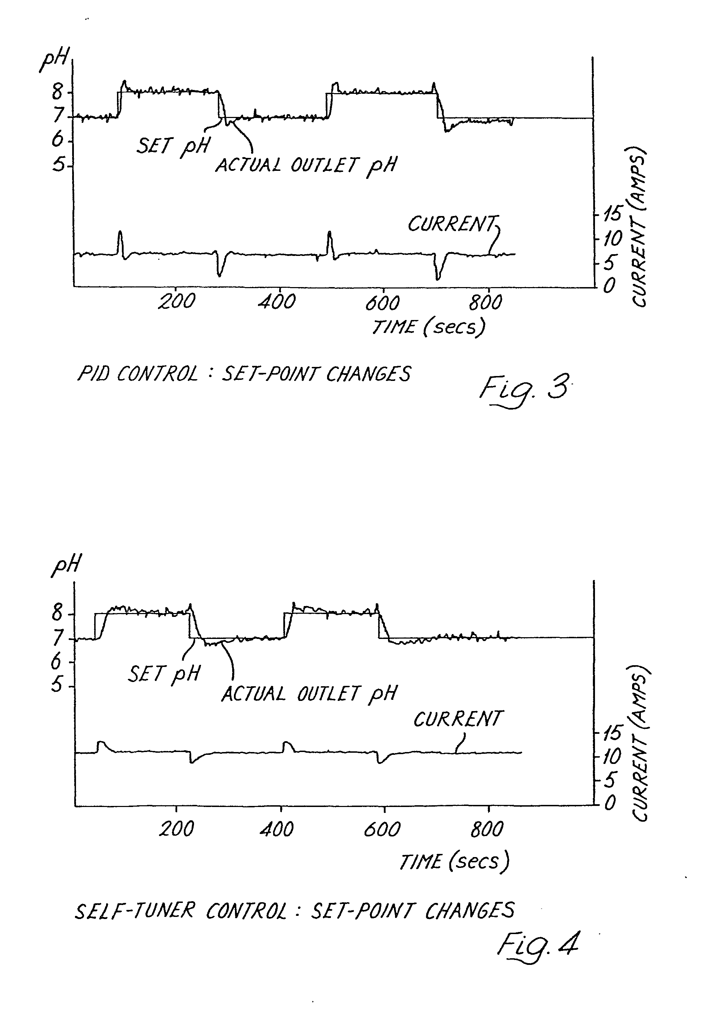

To compare the self-tuner and the analog PID controller for set-point changes and to show their transient response a PID controller was tuned for a given set of operating conditions. The settings and operating conditions are given in Table 1 and, for the self-tuner, in Table 2. The set-point is changed from a steady state pH of 7.0 to pH 8.0 and then back to 7.0. Figure 3 shows the transient responses for these (positive and negative) step changes. These differ due to the non-linearity of the process and changes in the dynamics of the system.

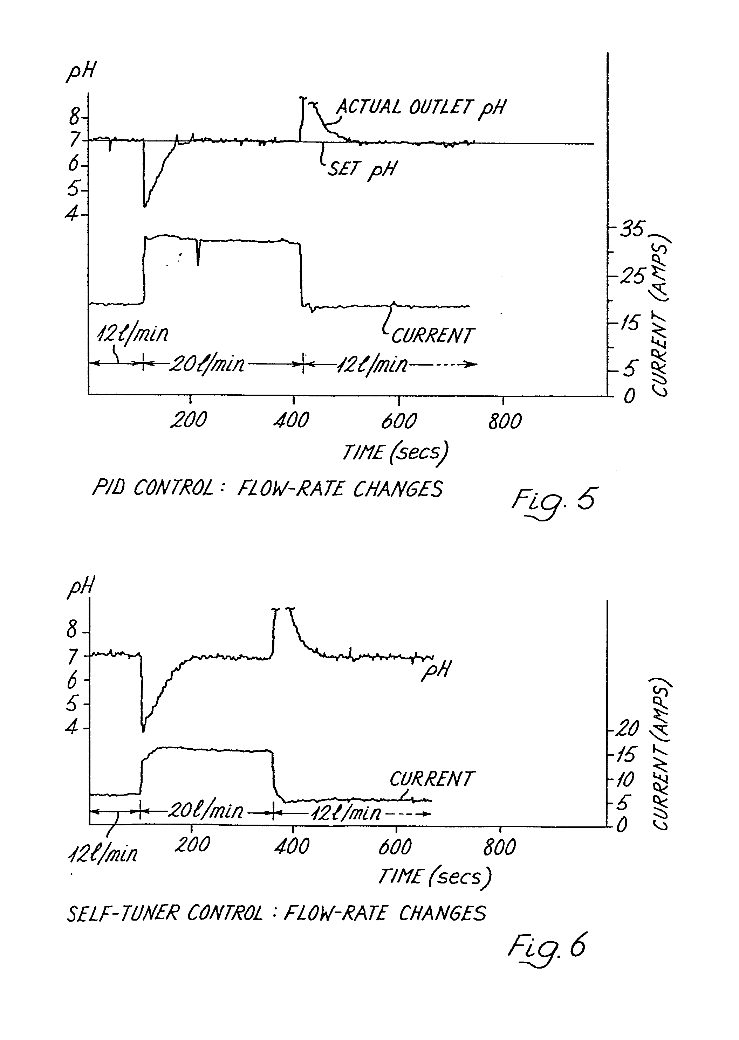

Figure 4 shows the results of imposing these set-point step-changes on self-tuner control.

Load disturbance can enter the process in the form of a flow-rate change or an inlet pH change. We made flow-rate changes from 12 1/min to 20 1/min and then back to 12 1/min. The PID results are shown in Figure 5 and the equivalent self-tuner responses are shown in Figure 6. The system was quite stable under PID control even at pH 7. Self-tuner responses however were more satisfactory. Because the disturbances are unmeasured in both cases, the PID controller simply minimised the error criteria, but in the case of the self-tuner the system identification yields to the new dynamics of the system. This would be most useful if a set-point change followed a flow-rate disturbance, as the PID controller might need retuning but the self-tuner would not.

In some cases, unmeasured disturbances create instability when the self-tuner is applied, but by identifying the disturbance parameters from the prediction of output, the response of the self-tuner to subsequent disturbances is much more satisfactory, the self-tuner not having to re-identify the process.

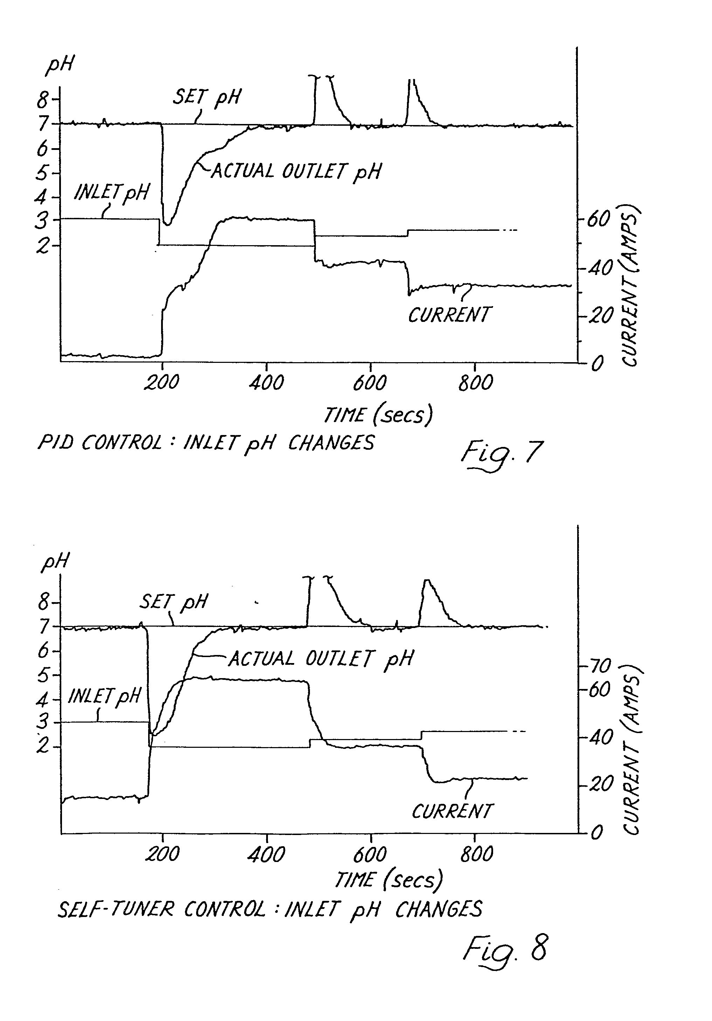

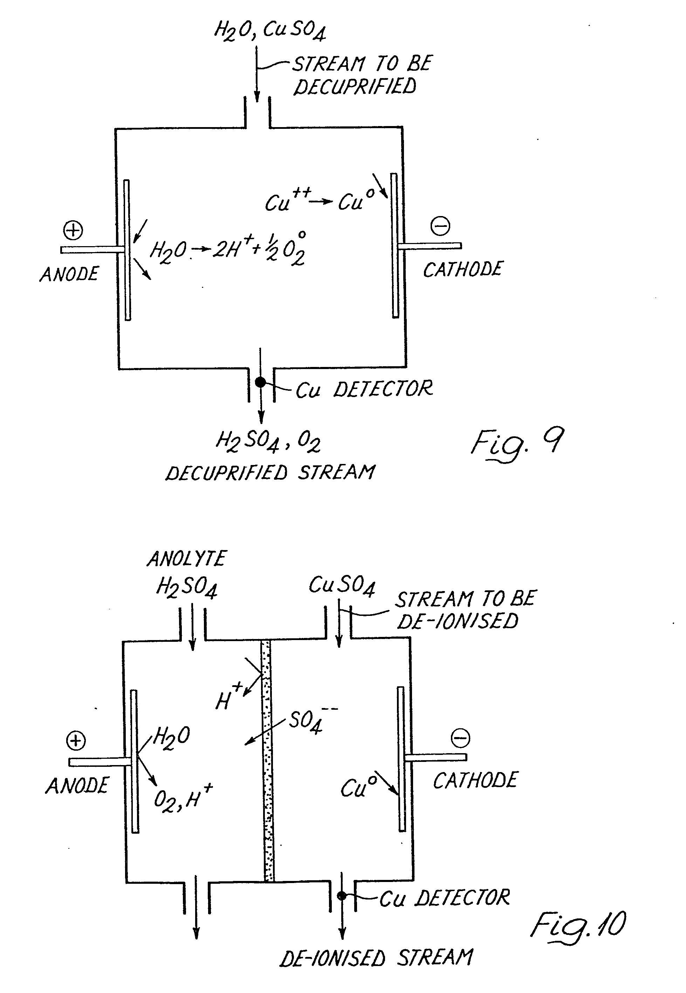

Figure 7 and 8 show the effect of step-changes in inlet pH for PID and self-tuner control respectively. Even modest pH changes can represent considerable load disturbance, because of the logarithmic relationship between pH and hydrogen ion concentration. Even the very simple PID analog control action, which itself is less preferable than the self-tuner, is seen to remain stable even with load changes of (effectively) a factor of 30. Other experiments have shown it to remain stable when the required current has changed from $\frac{1}{2}$A to 85A at pH 7 (load change factor of 170).

TABLE 1: PID settings

| Fig. | Steady-state | | | Controller | | | Current range |
|------|--------|-------|----------------|--------|-----------|-----------|-----------|
|      | pH-out | pH-in | Flow 1/min.    | p.b.w. | Ti (sec)  | Td (sec)  |           |
| 3    | 7.00 8.00 7.00 | 2.40 | 12.0 | 90% | 8.00 | not applied | 0-50 amp |
| 5    | 7.00 | 2.30 | 12.0 25.0 13.0 | 90% | 8.00 | not applied | 0-50 amp |
| 7    | 7.00 | 3.01 2.01 2.31 2.60 | 20.0 | 180% | 8.00 | not applied | 0-100 amp |

p.b.w. = proportional bandwidth

TABLE 2:  Self-tuner setting

| Fig. | Steady-state | | | Controller | | | Current range |
|------|--------|-------|-------------|---|------|----------|-----------|
|      | pH-out | pH-in | Flow (1/min)| N | Kp   | Ti (sec) |           |
| 4    | 7.00 8.00 7.00 | 2.10 | 12.0 | 3 | 0.35 | 33 | 0-50 amp |

TABLE 2: Cont'd.

| Fig. | Steady-state | | | Controller | | | Current range |
|------|--------|-------|----------------|---|------|-----------|-------------|
|      | pH-out | pH-in | Flow (1/min)   | N | Kp   | Ti (sec)  |             |
| 6    | 7.00   | 2.30  | 20.0 12.0 20.0 | 3 | 0.40 | 33        | 0-50 amp    |
| 8    | 7.00   | 3.85 2.00 2.20 2.30 | 20.0 | 3 | 0.40 | 33 | 0-100 amp |

N = system order (dimensionless)

Kp= controller gain

Figure 2 is a schematic cross-section of a cell used for electrolytically neutralising an acid HA without electrolysing it.

A central stream of HA is bounded on one side by a cation-permeable membrane behind which is disposed an anode in contact with aqueous NaCl. On the other side, the HA stream is bounded by an anion-permeable membrane behind which is disposed a cathode in contact with aqueous NaOH. The HA stream itself is not contacted by any electrode (except, which hardly counts because of its infinitesimal current, a pH electrode to monitor the stream).

A pH electrode (not shown) downstream of the cell detects excessive acidity or alkalinity, and in response, a current of appropriate magnitude is imposed in the sense shown, the magnitude being controlled in response to a desired/actual pH comparison, as described above.

In the anode region, chloride ion is oxidised by the anode to chlorine gas while, in compensation, sodium ion migrates across the cation-permeable membrane. This membrane prevents $A^-$ ion from discharging itself at the anode. The voltage gradient discourages $A^-$ from migrating across the anion-permeable membrane bounding the cathode region, and consequently the concentration of $A^-$ in the central stream remains unchanged.

In the cathode region, hydrogen is evolved at the cathode, while, in compensation, hydroxide ion migrates across the anion-permeable membrane. Hydrated $H^+$ ion from the acid HA cannot pass the other way. The hydroxide ion in any case neutralises $H^+$, and thus the HA stream emerges substantially converted to an NaA stream (or, if desired, to some specified alkaline pH, i.e. an alkaline stream of NaA + NaOH; or to some specified acidic pH, i.e. an acidic stream of NaA + HA).

Turning to Figure 9, a cell is illustrated for removing only copper from an aqueous effluent stream containing copper sulphate. Sufficiently downstream of the cell to avoid electric field effects is a copper detector for controlling the current through the cell by the routines described.

At the (copper) cathode, copper ion is plated out as copper, and hence the cathode needs no membrane to protect it. Since it is not required to remove sulphate, no membrane is provided to protect the (platinised titanium) anode, at which oxygen is evolved. The emergent stream is thus purified of copper to any required degree. Without any control, i.e. with a constant current passed through the cell despite varying copper sulphate loadings, a surge of copper sulphate would lead to some copper remaining untreated in the effluent, while a temporary low throughput of copper sulphate would cause hydroxyl ions to be generated at the cathode.

- 13 -

Turning now to Figure 10, a cell is illustrated for de-ionising an aqueous effluent stream containing copper sulphate. An anion-permeable membrane separates the effluent stream from an anode compartment through which an anolyte stream of sulphuric acid is circulated. The anode is of platinised titanium. At the cathode, which is of copper, copper ion plates out as copper and hence the cathode needs no membrane to protect it. (Had the stream contained sulphuric acid, hydrogen ion would have been able to discharge itself as hydrogen gas at the cathode, and therefore, again no membrane would have been needed. Furthermore, if the object had been to introduce copper into the stream (which might contain copper sulphate, or be completely different, such as brine), the cathode would then do duty as an anode, and the general cell arrangement of Figure 2 would be appropriate; in this case, the object might be to generate, from non-homogeneous copper sulphate feedstock solution, a stream of constant concentration of copper sulphate - for which purpose a copper detector would be provided (as shown for Figures 9 and 10) sufficiently downstream of the cell to avoid electric field effects, for controlling the current through the cell - or else the object might be to introduce copper ion into a brine stream to give a constant Cu/Na ratio - for which purpose the copper detector would be replaced by a sodium detector.)

In the present case, however, a copper detector is provided as just described, or, if more convenient, a sulphate detector (since that ion is also to be removed). The detector controls the current through the cell as described, with the object of de-ionising the stream. Sulphate ion migrates through the membrane (which is a barrier to hydrogen ion) towards the anode, where oxygen is evolved and can be sold. If control were not applied, i.e. a constant current were simply imposed on the cell, a surge of copper sulphate would lead to some copper sulphate escaping into the environment (harming any fish in water receiving the supposedly de-ionised effluent stream), while a current large enough to cope with such surges would, all the rest of the time, generate hydroxyl ion at the cathode after the copper had all been plated out, thus causing the effluent to become alkaline (harming any fish just as surely), and perhaps killing desirable bacteria in a filterbed or inducing normally stable materials to decompose, releasing ammonia for example.

- 15 -

CLAIMS

1. Controlling to a desired value the concentration of a specific ion in a stream, comprising passing the stream through a compartment of an electrochemical cell, the compartment being separated from an electrode of the cell by a membrane selective towards that ion (subject to the proviso below); measuring the concentration of that ion in the stream emerging from that compartment of the cell; comparing the measured concentration with the desired concentration; and adjusting the current through the cell in response to the comparison, provided that the membrane selective towards that ion can be omitted in any of the following cases (i) to (iii):

  (i)   the ion can plate itself on the said electrode.

  (ii)  the ion can discharge itself on the said electrode.

  (iii) the concentration of the ion is to be increased.

2. Controlling according to Claim 1, wherein the ion concentration is automatically continually measured by colorimetry, titration, or potentiometry, which may be ion-selective.

3. Controlling according to Claim 1 or 2, wherein the counter-electrode of the cell is separated from the compartment by a porous diaphragm or an ion-selective membrane.

4. Controlling according to any preceding claim, wherein that ion is $H^+$ and the ion concentration is measured by a pH-electrode.

5. Controlling according to any preceding claim, wherein the stream is turbulent as it passes through the cell.

6. Controlling according to any preceding claim, wherein the volume of the compartment, divided by the flow rate of the stream, is less than 5 seconds.

7. Controlling according to Claim 6, wherein that quotient is less than 0.05 seconds.

8. Controlling according to any preceding claim, wherein the stream, and/or the desired value of the concentration of the specific ion, is/are subject to disturbance.

9. Controlling according to any preceding claim, wherein the adjustment of the current is performed continually.

3M NaCl
ANOLYTE BRINE

3M NaCl + xM HCl
STREAM TO BE
NEUTRALISED

1

4

2a          3a

2                              3

⊕                              ⊖
ANODE                    CATHODE

Na⁺

$Cl^- e \rightarrow \frac{1}{2}Cl_2$          $H_2O + e \leftarrow$

$OH^- + \frac{1}{2}H_2$

$OH^-$

NEUTRALISED STREAM

Fig. 1

Fig. 2

$H^+ A^-$

⊕
$Cl^-$
$Na^+ \rightarrow$
NaCl

$\leftarrow OH^-$
NaOH
$Na^+$
⊖

CATION-PERMEABLE
MEMBRANE

ANION-PERMEABLE
MEMBRANE

PID CONTROL : SET-POINT CHANGES

Fig. 3

SELF-TUNER CONTROL : SET-POINT CHANGES

Fig. 4

PID CONTROL : FLOW-RATE CHANGES

Fig. 5

SELF-TUNER CONTROL : FLOW-RATE CHANGES

Fig. 6

PID CONTROL : INLET pH CHANGES

Fig. 7

SELF-TUNER CONTROL : INLET pH CHANGES

Fig. 8

$H_2O, CuSO_4$

STREAM TO BE
DECUPRIFIED

$Cu^{++} \rightarrow Cu^{o}$

$H_2O \rightarrow 2H^+ + \frac{1}{2}O_2^{o}$

⊕ ANODE

⊖ CATHODE

Cu DETECTOR

$H_2SO_4, O_2$
DECUPRIFIED STREAM

Fig. 9

ANOLYTE
$H_2SO_4$

$CuSO_4$ STREAM TO BE
DE-IONISED

$H^+$

$SO_4^{--}$

⊕ ANODE

$H_2O$

$O_2, H^+$

$Cu^{o}$

⊖ CATHODE

Cu DETECTOR

DE-IONISED STREAM

Fig. 10

European Patent Office

| | Citation of document with indication, where appropriate, of relevant passages | Relevant to claim | |
|---|---|---|---|
| | DE - A - 2 027 793 (AUSTRALIAN IRON) | 1,3 | C 25 D 21/12 |
| | + Claims; fig. + | | G 01 N 27/26 |
| | -- | | C 25 B 15/02 |
| X | DE - A - 1 571 723 (BASF) | 1,3,4 | |
| | + Pages 13-17; claim; fig. + | | |
| | -- | | |
| | FR - A - 1 596 263 (IONICS IN-CORPORATED) | 1 | |
| | + Claims; fig. + | | |
| | -- | | |
| | US - A - 3 794 817 (SHINSKEY) | 1 | |
| | + Claims + | | |
| | ---- | | |

DOCUMENTS CONSIDERED TO BE RELEVANT

TECHNICAL FIELDS SEARCHED (Int.Cl. )

C 25 D

G 01 N

C 25 B

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search VIENNA | Date of completion of the search 06-11-1980 | Examiner SLAMA | |

EPO Form 1503.1  06.78